# EUROPEAN PATENT SPECIFICATION

(11) **EP 2 056 684 B1**
(45) Date of publication and mention of the grant of the patent: **14.07.2010**
(21) Application number: 07788092.0
(22) Date of filing: 31.07.2007
(51) Int. Cl.: A23L 2/02, A23L 1/212, A23L 1/214, A23L 1/30, A23L 2/52

(54) **PRE-BIOTIC-CONTAINING LIQUID FOOD PRODUCT**
PRÄBIOTIKUMHALTIGES FLÜSSIGES NAHRUNGSMITTELPRODUKT
PRODUIT ALIMENTAIRE LIQUIDE CONTENANT DES PRÉBIOTIQUES

(30) Priority: 01.09.2006 EP 06119964
(43) Date of publication of application: 13.05.2009
(73) Proprietor: Unilever N.V., 3013 AL Rotterdam (NL); Unilever PLC, London EC4Y 0DY (GB)
(72) Inventor: BINGHAM, Maxwell Oliver, 3133 AT Vlaardingen (NL); SEEWI, Gila, 74074 Heilbronn (DE); TOSCHKA, Holger York, 74074 Heilbronn (DE)
(74) Representative: Corsten, Michael Allan
(86) International application number: PCT/EP2007/057897
(87) International publication number: WO 2008/025627

(56) References cited:
- DE-A1- 10 324 158
- DE-A1- 19 546 150
- JP-A- 4 311 378
- US-A- 5 248 515
- US-A1- 2003 113 428
- US-B1- 6 656 512
- DATABASE WPI Week 200337 Derwent Publications Ltd., London, GB; AN 2003-390575 XP002404051 & RU 2 202 231 C2 (UNIV KUBAN TECHN) 20 April 2003 (2003-04-20)

## Description

### Field of the invention

The present invention relates to a liquid food product comprising fruit and vegetables in such an amount that they provide an important part of the recommended daily amount of fruit and vegetables for the human adult, which food product further provides an improved butyrate production.

### Background of the invention

Concentrated fruit and vegetable liquid food preparations have become a popular way of providing a convenient means of consuming an important part of the recommended daily amount of fruit and/or vegetable as indicated by the World Health Organisation. This provides the consumer with the daily needed amounts of for example important minerals and vitamins and antioxidants. Concentrated fruit and vegetable food preparations for this purpose are different from the regular fruit juices.

Regular fruit juices are usually so called single strength juices. For example, when freshly prepared a single strength orange juice is simply the juice extracted from oranges without diluting it with water or removing the water by concentration. For cost reasons, single strength orange juice is often reconstituted from orange juice concentrates. First, fresh orange juice is concentrated to concentrated liquid. The concentrate is then shipped to a desired location for a fraction of the costs compared to shipping the equivalent amount in juice. At the desired location, the single strength juice is reconstituted by adding an amount of water such that the resulting product in not diluted or concentrated compared to the original single strength juice. According most food legislations this is necessary to be able to label the beverage as a juice. Cheaper products are possible when more water is added to the concentrate together with sugar and flavours to compensate for the diluted taste. The latter products usually cannot be labelled as juice but are often referred to as "nectar" or "fruit drinks" (according to most legislations).

Single strength juice are an easy way of consuming vitamins and minerals but as the beverage is mainly used to quench thirst it is often an uncontrolled means of consumption. In general this is no problem as the ingredients in something like orange or apple juice can hardly be overdosed.

Instead of more water, less water can be added to the concentrate such that the resulting product contains less water but a higher concentration of vitamins and minerals leading for example to a double strength orange juice.

However, consumption of even double strength orange juice is not equal to consuming a whole orange as for example the amount of fibers is missing in the juice. Therefore, it will be clear that a fruit and vegetable liquid food product cannot replace the consumption of fruit and vegetable. Although the present application refers to "a liquid food product that provides an important part of the recommended daily amount of fruit and vegetable" this is intended to mean "a liquid food product that provides the equivalent of an important part of the recommended daily amount of fruit and vegetable".

In addition to the vitamins and minerals, there is an interest in increasing the amount of pre-biotic compounds in the average western diet. Pre-biotic compounds (or for short: pre-biotic(s)) form a class of compounds which, when eaten by humans, are not digested by the digestive system of the human, but rather pass the stomach and the small intestine largely unchanged. In the colon, pre-biotics are believed to be broken down by the colon bacteria, and in such a way that it is believed to being able to contribute to the relative proportion of "good" colon bacteria and/or can contribute to restoring the natural balance of the digestive system. It further is believed this can result in an improved health of gut and immune system and/or it may support the body's natural defence system. Purified pre-biotic oligosaccharides which may be added to processed foods include manno-olligosaccharides fructooligosaccharides, xylooligosaccharides, and galactooligosaccharides. Other sources include raw oats, unrefined wheat and unrefined barley.

Epidemiological and animal studies suggest that dietary fat and protein may promote carcinogenesis in the colon, whereas increases in pre-biotics and complex carbohydrates in the diet may protect against colon cancer. However, simply adding a pre-biotic compound to a food product may not be efficient as other factors may be more important. For example, recent studies suggest that colonic luminal butyrate concentrations are a key protective component of high-fibre diets against colon cancer (O. C. Velázquez, H. W. Lederer and J. L. Rombeau 1996. "Butyrate and the Colonocyte: Implications for Neoplasia", Digestive Diseases and Science Vol. 41, No. 4: 727-739). Butyrate production is preferably measured by an in vitro test as described below.

One object of the invention is to provide a liquid food product capable of an improved butyrate production while at the same time providing an important part of the recommended daily amount of fruit and vegetables.

### Summary of the invention

Thus, there is need for a liquid food product which is capable of an improved butyrate production while at the same time providing an important part of the recommended daily amount of fruit and vegetables

It has now been found that according to a first aspect such may be achieved by a packaged portion of liquid food product comprising a blend of at least one (preferably at least two) species of fruit in liquefied, puree, pulp, concentrate, extract or juice form and at least one (preferably at least two) species of vegetables in liquefied, puree, pulp, concentrate, extract or juice form, in an amount that they provide an important part of the recommended daily amount of fruit and vegetables, further comprising Helianthus tuberosus (Jerusalem artichoke) in liquefied, puree, pulp, concentrate, extract or juice form in an amount per packaged portion of liquid food product of 1.5-8 g, based on dry weight Helianthus tuberosus.

### Detailed description of the invention

For the purpose of the present application, a liquid food product provides an important part of the recommended daily amount of fruit and vegetables when the liquid food product comprises
a) at least 150 mg, preferably at least 200 mg, more preferably at least 250 mg, and preferably at most 1000 mg, more preferably at most 900, most preferably at most 800 mg potassium per 100 ml liquid food product; and
b) optionally at least 5 mg, preferably at least 7 mg, more preferably at least 10 mg, and preferably at most 100 mg, more preferably at most 90 mg, most preferably at most 80 mg magnesium per 100 ml liquid food product; and
c) optionally at least 5 mg, preferably at least 10 mg, more preferably at least 20 mg, and preferably at most 100 mg, more preferably at most 75 mg, most preferably at most 50 mg calcium per 100 ml liquid food product; and
d) at least 500 micromol, preferably at least 700 micromol, more preferably at least 800 micromol, and preferably at most 4000 micromol, more preferably at most 3000 micromol, most preferably at most 2500 micromol Trolox Equivalent Antioxidant Capacity (TEAC) per 100 ml liquid food product; and
e) at least 5 microgram, preferably at least 7 microgram, more preferably at least 10 microgram, and preferably at most 100 microgram, more preferably at most 90 microgram, most preferably at most 80 microgram folic acid per 100 ml liquid food product; and
f) optionally at least 0.01 mg, preferably at least 0.05 mg, more preferably at least 0.1 mg, and preferably at most 50 mg, more preferably at most 25 mg, most preferably at most 8 mg beta carotene per 100 ml liquid food product, and
whereby the compounds a) to f) if present are derived from the fruit(s) and/or vegetable(s).

It is presently generally accepted that a healthy diet should be high in fruit and vegetables. According to the World Health Organisation (WHO) recommendations a healthy diet should include both (the goodness of) fruit as well as vegetables. Fruit and vegetables provide micronutrients such as antioxidants, vitamins, minerals, and other valuable components. The WHO has early in the 21^{st} century issued recommendations that a healthy diet should preferably contain a minimum of 400 g fruit and vegetables (taken together) per day, based on fresh weight, and that part of such 400 g should be fruit, and part should be vegetables. These recommendations are sometimes (e.g. in specific countries) also translated as "5-a-day", referring that the recommendation is that one should, for a healthy diet, consume at least 5 portions of fruit and vegetables (a portion being equal to about 80 g mean fresh weight) per day. Such fruit and vegetables can be purchased fresh, and cleaned and prepared for consumption, but especially in the developed world a large group of consumers leads too busy lifestyles to comply with such recommendation. Yet among this group of consumers there are those who recognise and acknowledge the need for a higher intake in fruit and vegetables and have a desire for a healthier lifestyle, but want it in a convenient way. The WHO recommendations cover fresh fruit and vegetables, but also to a large extent prepared fruit and vegetables like juices, purees, dried fruit and vegetables, and so on. Thus, the formulations according to the invention will support people to achieve the 5-a-day dosage of fruit and vegetables.

In the context of the current WHO guidelines of 400 g fruit and vegetables per day, an important part of the recommended daily amount of fruit and vegetables may alternatively be defined as preferably at least 30%, preferably at least 40%, more preferably 40-100%, most preferably 40-70% of the recommended daily amount of fruit and vegetables of 400g per day, percentages by weight. One way of calculating the equivalent value of fresh fruit and vegetables of a liquid food product according to the invention is simply calculating how much fresh fruit was used to prepare the fruit (or vegetable) concentrate, juice, puree or extract. For example in the case of apple puree, if 100 g of fresh apple is used to prepare 100 g of apple puree, the multiplication factor is 1.0. In the case of single strength apple juice, if 145 g of fresh apple is used to prepare 100 g of apple juice (single strength), the multiplication factor for single strength apple juice is 1.45. In the case of an apple juice concentrate a second multiplication factor needs to be used to calculate the equivalent amount of single strength apple juice. Thus, if 620 g of single strength apple juice is used to prepare 100 g of apple juice concentrate, the multiplication factor for apple juice concentrate is 6.2 to calculate the equivalent amount of single strength apple juice. To calculate the equivalent amount of fresh apple of this apple juice concentrate both factors are multiplied: 6.2*1.45 = 8.99. Thus, the equivalent amount of fresh apple of 12.6 g of apple juice concentrate is 12.6*6.2*1.45=113.3 g of fresh apple.

When we measured the butyrate production of a liquid food product comprising a fruit and vegetable concentrate such that it provides an important part of the recommended daily amount of fruit and vegetables we noticed a certain base production of butyrate. An attempt to increase this by adding 2.5 g of chicory derived inulin (dry weight) only resulted in a small increase of the butyrate production(see examples)..

Surprisingly, it was found that the liquid food product according to the invention comprising Helianthus tuberosus instead of chicory showed an unexpectedly improved butyrate production. The improvement is defined as a significant increase in butyrate production compared to an identical sample without Helianthus tuberosus but with the same amount of inulin derived from chicory instead. The synergistic increase in butyrate production was more than twofold compared to the base product whereas chicory derived inulin only showed a 16% increase.

Accordingly, another aspect of the invention provides the use of Helianthus tuberosus for the manufacture of an edible product for improved butyrate production. According to yet another embodiment, a method is provided for synergistically increasing the butyrate production by providing an edible food product comprising Helianthus tuberosus, preferably at least 1.5 and at most 8 g Helianthus tuberosus per daily portion of said product. Although, it is preferred that the edible product is a liquid food product as described, other formats (non-liquid) or compositions are possible. Preferably the edible product is comprises the ingredients in the ranges as described for the liquid food product

In addition to the synergistic response, the packaged portion provides a convenient way of consuming a dosage of a prebiotic compound which is believed to be effective without causing negative side effects as bloating. Furthermore, the packaged portion according to the invention provides a consumer product with a high degree of acceptance since no purified prebiotic is used. Purified prebiotics such as purified manno-olligosaccharides fructooligosaccharides, xylooligosaccharides, and galactooligosaccharides need to be declared on the label of food product. Since these names appear non-natural to the average consumer it is believed such ingredients decrease the acceptance.

Preferably, the liquid food product comprises a prebiotic compound which is an fructooligosaccharide, more preferably an inulin derived from Helianthus tuberosus.

Inulin is an example of a group of compounds having a pre-biotic function. Inulin is found in a number of plants, such as chicory (the natural source highest in inulin), Jerusalem artichoke, banana, leek, onions, artichoke. Inulin is not a single entity, rather a polydisperse saccharide comprised essentially of linear 2-1ß fructose units with an average degree of polymerization (DP) distribution of 3-70. Depending on the source used and the process to extract the inulin the average degree of polymerization (DP) may vary. According to one source in nature the DP ranges from 2 - 70; native chicory inulin has an average DP of 10-20, whereas Jerusalem artichoke averages a DP of 6. Inulin is generally used in its refined form (usually from chicory).

The total volume of a packaged portion may be at least 50ml more preferably at least 70 ml, even more preferably at least 90 ml and at most 350 ml, preferably at most 200ml, more preferably at most 50 ml, even more preferably at most 130 ml, even most preferably at most 110 ml. Preferably the liquid food product is packaged as one portion comprising one daily serving of the liquid food product, for example one sealed container of 100 ml food product. So-called multi-packs are of course possible by clustering more that one container. One daily serving is defined as a serving which is recommended on the package to be consumed daily for certain purposes, e.g. to obtain the equivalent of 200 g of fruit and vegetables. Often such recommendation is to avoid under or overdosing. Preferably, the liquid food preparation according to the invention comprises more than 2 g inulin per packaged portion but less than 10 g, more preferably less than 8 g, more preferably less than 6 g of inulin (based on dry weight).

In the product according to the present invention, the liquid food product is preferably a concentrate, such that the total volume of the packaged portion is between 50 and 150 ml, preferably 70 - 130 ml, more preferably 90-110 ml. The product is a packaged product, and the packaging is preferably a sealed container, preferably a sealed bottle. Such container can be conveniently marketed as something that supports a healthy diet.

Inulin both in its refined form as well as in the form of Jerusalem artichoke are added to a range of food products, such as e.g. fruit juices. Problem with such formulations is that dosage is usually not clear to the consumer, often leading to under dosage (and thus no effect) or over dosage (and thus leading to intestinal complaints such as bloating). Especially overdosing is a problem with prebiotic containing (single strength) juices as these are used to quench thirst rather than to consume controlled amounts of fruit and vegetables.

In the packaged portion according to the present invention it is preferred that per packaged portion of liquid food product Helianthus tuberosus (Jerusalem artichoke) is present in liquefied, puree, pulp, concentrate, extract or juice form in an amount of of at least 1.5 g, more preferably 2g, more preferably at least 4 g, even more preferably at most 8 g, most preferably at most 6 g based on dry weight Helianthus tuberosus.

Preferably, the packaged food product according to the present invention is substantially free of declarable inulin. Food ingredients need to be declared by the common name known to the average consumer. Thus, when purified inulin is added to a food product, this inulin is declarable by its common name and the ingredient list should mention inulin (in accordance with the European Food Labelling Directive 2000/13/EC). In contrast, by using liquefied, puree, pulp, concentrate, extract or juice form of Helianthus tuberosus (Jerusalem artichoke) one can conveniently include inulin in the food product, whereas on the label it can be declared as e.g. "juice of Jerusalem artichoke".

The liquid food product preferably comprises at least 0.01 mg, preferably at least 0.05 mg, more preferably at least 0.1 mg, and preferably at most 50 mg, more preferably at most 25 mg, most preferably at most 8 mg beta carotene per 100 ml liquid food product. If present, preferably the beta carotene is derived from sources including carrot and pumpkin.

The liquid food product preferably comprises a specific amount of antioxidants. The amount of antioxidants is preferably expressed in micromol Trolox Equivalent Antioxidant Capacity (TEAC) using the protocol described herein. The antioxidants are derived from vegetables and fruits. Preferably, at least part of the antioxidants in the liquid food product are derived from acerola berries. Accordingly, the product according to the invention preferably further comprises acerola berries in liquefied, puree, pulp, concentrate, juice or extract form.

Since the liquid food product comprises other fruit and vegetable purees, concentrates, pulp, juice or extracts in addition to Helianthus tuberosus, other fibrous material may be present, both dissolvable as well as non-dissolvable fibres. Preferably, next to the inulin from Helianthus tuberosus fibres other than inulin may be present in an amount of 0.5-3 g (based on dry weight).

The product preferably has a pH of 3.5 - 4.5, preferably 3.7 - 4.2. Usually there will be enough acids being present in the fruit and vegetables in liquefied, puree, pulp, concentrate, extract or juice form to achieve such.

The product according to the present invention is preferably substantially free from any of the following compounds: sweeteners, colourants, preservatives and antioxidants, other than compounds from the fruit(s) and/or vegetable(s) and/or Helianthus tuberosus. Also, said product is preferably substantially free from food additives which are declarable by E-number as known from the European Food Safety Authority at the earliest filing date of this application. Substantially free is meant to describe that if present these compounds or food additives are too low to have a measurable effect.

The invention further relates to a process for preparing a packaging comprising a liquid food product as described above, the process comprising the steps of:
■ mixing part or all of the liquefied, puree, pulp, concentrate, extract or juice of fruit, vegetables and Helianthus tuberosus (Jerusalem artichoke)
■ homogenising, de- aerating and pasteurising the mixture in any given order
■ hot-filling packaging with the mixed, homogenised, de-aerated and pasteurised product and closing the packaging.

In the above process, homogenising, de-aerating and pasteurising are preferably carried out in the sequence of first homogenising, then de-aerating and then pasteurising. For some formulations it may be desirable to have whole fruit or vegetable cells present in the end product which are rather big, such as citrus fruit cells. In such case, it may be preferred to add citrus fruit cells after homogenising.

### Examples

### Trolox-Equivalent Antioxidant Capacity (TEAC)

### Sample prep:

About 2 grams (weighed accurately) of sample is diluted in a 25 ml volumetric flask using PBS buffer (5 mmol/l).
If necessary the sample is further diluted to match the calibration range which is:
0.5 - 2.5 mmol/l Trolox.

### Reagent prep:

12 - 72 hours before analyses: 55 mg of ABTS (2,2'-azino-bis(3-ethylbenzthiazoline-6-sulphonic acid) is dissolved in 50 ml of MilliQ water
189 mg of potassiumpersulfate is dissolved in 10 ml MilliQ water
After dissolving, 500 µl of the potassiumpersulfate solution is added to the ABTS solution after which it is put in the dark.

### Shortly before analyses:

The reagent is diluted using PBS buffer (PBS : reagent, 24:1)

### Measurement:

10 µl of diluted (centrifuged) sample is pipetted into a small test-tube, after which 1000 µl of TEAC reagent is added. When adding the reagent a stopwatch is started, the reagent-sample solution is then mildly mixed for 30 seconds (using a vortex mixer) and then transferred to a 1 cm plastic microcuvet (Greiner, halb-mikro) after which the OD is measured at exactly 60 seconds, using a spectrophotometer set to 734 nm.

Note; the diluted reagent is stable for only two hours at RT.

### Calculation:

Linear regression using OD's of samples and five calibration standards within the 0.5 to 2.5 mmol/l range.

Composition A (according to the invention): A packaged portion of an apple/carrot/orange liquid food product containing Helianthus tuberosus (Jerusalem artichoke) juice concentrate

| **Ingredient** | **% (wt)** | **Factor 1** | **Factor 2** | **Equivalent fresh weight fruit and vegetables (g)** |
|---|---|---|---|---|
| Apple puree | 32.7 | 1 | 1 | 32.7 |
| Apple juice concentrate | 12.6 | 6.2 | 1.45 | 113.3 |
| Carrot juice concentrate | 7.5 | 8.1 | 1.75 | 106.3 |
| Orange cells | 4.7 | 1 | 1 | 4.7 |
| Lemon juice concentrate | 0.5 | 5 | 1.7 | 4.3 |
| Jerusalem artichoke juice concentrate | 6.5 | 4.8 | 1.76 | 54.9 |
| water demineralised | 35.5 | | | |
| TOTAL | 100 | | | |

This composition was prepared by:
- mixing all ingredients except the orange cells
- high-pressure homogenization (2 stages: 90 bars followed by 50 bars)
- addition of orange cells
- optionally, de-aeration of the composition
- pasteurization (90°C)
- filling of bottles of 100 ml
- sealing of bottles
- cooling
- labelling.
whereby the sequence of steps of pasteurizing to cooling took approx. than 2 minutes.

In the table, factor 1 is to calculate from juice concentrate to a single strength juice. In the table, factor 2 is to calculate from the single strength juice to the fresh fruit/vegetable.

A bottle of 100 ml of said composition provides approx. 65% of the recommended daily amount of fruit and vegetables (excluding inulin) and approx. 50% of the recommended daily amount of inulin. The amount of dry matter Jerusalem artichoke used corresponds to 4.7 gram of dry matter Jerusalem artichoke per packaged portion of 100ml. The Jerusalem artichoke juice used contains 72 wt% dry matter.of Jerusalem artichoke per 100 gram of Jerusalem artichoke juice.

Another packaged portion of 100 ml of a liquid food product according to the invention was prepared as described above and it comprised 1257 micromol TEAC, 22.7 folic acid, 1.1 mg beta carotene, 423 mg Potassium, 14.2 mg Magnesium, 16.5 mg of Calcium and 2.8 g of inulin.

### Butyrate production

To measure the butyrate production, parallel fermentations were performed and subsequently the production rate of butyrate was determined. Each fermentation was performed for 24 hours after which samples were taken for a variety of analyses. In this case, the analysis performed is high performance liquid chromatography (HPLC) to assess production of SCFA. The following three compositions were made: Composition Base (similar to Composition A except that no Jerusalem artichoke juice was present), Composition Chicory (identical to Composition Base except that it further comprises 2.5 g inulin (dry weight) derived from chicory, Composition Helianthus Tuberosus (identical to Composition Base except that it further comprises Helianthus Tuberosus juice concentrate comprising an amount of 2.5 g inulin (dry weight).

### Materials

The following materials were obtained from a variety of sources for use in the following experiment: Raftiline HPX (Chicory inulin, Orafti, Belgium), nutriose FM06 (Roquette, Fr), peptone water, bile salts (no.3) (Oxoid Ltd, UK), BactoTM yeast extract (Bacto, Dickinson & company, USA), NaHCO3, L-cysteine (free base), KH2PO4, hemin, vitamin K1 (Sigma Aldrich, Germany), NaCl, CaCl2.6H2O (Fisher Scientific, UK), K2HPO4, MgSO4.7H20 (Merck, Germany), Tween 80 (Koch-Light Ltd, UK) and resazurin (Brocades Stheeman & Pharmaica, Netherlands) and Helianthus tuberosus juice concentrate (35% inulin, Ernteband, DE)

### Preparation and collection of faecal samples

Faecal samples were obtained from healthy human volunteers who had not been prescribed antibiotics for at least 6 months prior to the study and had no history of any gastrointestinal disease. Samples were collected and used immediately after collection. A 1:10 dilution in anaerobic phosphate buffered saline (PBS) (8g Nacl , 0.2g KCL, 1.44g Na2HPO4H2O, 0.24g KH2PO4, pH=7.4) was prepared and the samples homogenised in a stomacher for 2 min.

### Pre-digestion of substrates

A simulation of upper gastrointestinal tract digestion was performed. 100g of each of the three compositions was added to 100ml of d.H2O and adjusted to pH 2.0 with 6M HCl. 0.54g hog pepsin (dissolved in 5ml 0.1M HCl) was then added and the mixture incubated for two hours at 370C. After incubation the pH was adjusted to pH 6.0 and a mixture of 0.1125g pancreatin, 1.202g bile extract, 25ml 0.5M NaHCO3 was added. The complete mixture was adjusted to pH 7.0 and then poured into a pre-washed dialysis tubing (40-50cm). The dialysis tube was placed in a 5L Duran (or similar) bottle containing enough distilled water to cover completely the dialysis tubing and incubated for 22 hours at 370C. Finally, the water in the in 5L Duran bottle was replaced and incubated for a further 2 hours at 370C. The product was frozen at -800C and lyophilised.

### Fermentations

The batch culture fermentation vessels used consist of 300ml (total volume) chemostats which are stirred, pH controlled (via a Fermac 260 pH control module, Electrolab, UK) and temperature controlled (via a circulating water bath). These were filled with 180ml of basal nutrient medium. The medium contained the following ingredients: peptone water (2 g/l), yeast extract (2 g/l), NaCl (0.1 g/l), K2HPO4 (0.04 g/l), KH2PO4 (0.04 g/l), MgSO4.7H2O (0.01 g/l), CaCl2·6H2O (0.01 g/l), NaHCO3 (2g/l), Tween 80 (2 ml/l), hemin (0.5 g/l), vitamin K1 (10 µl/l), L-cysteine (0.5 g/l), bile salts (sodium glycocholate and sodium taurocholate) (0.5 g/l) and resazurin (0.25 g/l). The media was adjusted to pH 7.0, autoclaved at 121oC for 15mins and gassed overnight with oxygen free nitrogen (15ml/hr). Prior to inoculation, the media was readjusted to pH 7.0 and aliquoted asceptically into respective vessels. Immediately prior to the addition of the faecal slurry, the entirety of each of the lyophilised pre-digested Compositions (Base, Chicory, Helianthus tuberosus) was added to the fermentors. Culture temperature was set at 37 °C by means of a circulating water bath and medium pH was maintained at 6.8. The chemostats were inoculated with 20ml of fresh faecal slurry (1/10 w/v) and continuously sparged with 02-free N2 at a flow rate of 15 ml/min. Samples (1 ml each) from each vessel were obtained for analysis of SCFA by high performance liquid chromatography (HPLC). Batch cultures were ran for a period of 24 hours and samples were obtained at T0 and T24.

### Analysis of Short Chain Fatty Acids (via HPLC)

The 24 hour production rate of butyrate in the fermentations was determined in vitro. A standard curve was generated from known concentrations of external standards of butyrate. Retention times and areas under the curve of the unknown samples were compared to standards to determine butyrate concentration (mM). Samples were centrifuged at 1500g for 5 min, filter sterilised and the resultant supernatant used for injection. A Model 10A VP UV HPLC (Shimadzu), with an integrated oven compartment (65 °C) and data system was used. Sample injection (10 µl) was performed using an autosampler and three injections were performed for each sample. The column was a pre-packed Aminex HPX-87-H strong cation-exchange resin column (300 x 7.8 mm ID), fitted with an ion exclusion micro-guard refill cartridge (Bio-Rad Labs., USA). The eluent used was 0.005 M sulphuric acid.

### Results of the butyrate production

| | % increase in butyrate production after 24hr fermentation (Base = 100%) |
|---|---|
| Composition Base (comparative example) | 100% |
| Composition Chicory (comparative example) | 116% |
| Composition Helianthus tuberosus (according to the invention) | 232% |

The butyrate production was only slightly increased after adding 2.5 g inulin derived from chicory to the Base composition. Surprisingly, replacing the 2.5 g inulin derived from chicory by the same amount derived from Helianthus tuberosus juice concentrate, the butyrate production more than doubled in a synergistic manner.

## Claims

1. A packaged portion of liquid food product comprising a blend of at least one (preferably at least two) species of fruit in liquefied, puree, pulp, concentrate, extract or juice form and at least one (preferably at least two) species of vegetables in liquefied, puree, pulp, concentrate, extract or juice form, in an amount that they provide an important part of the recommended daily amount of fruit and vegetables, further comprising Helianthus tuberosus (Jerusalem artichoke) in liquefied, puree, pulp, concentrate, extract or juice form in an amount per packaged portion of liquid food product of 1.5-8 g, based on dry weight Helianthus tuberosus,
whereby the packaged portion comprises
a) at least 150 mg, preferably at least 200 mg, more preferably at least 250 mg, and preferably at most 1000 mg, more preferably at most 900, most preferably at most 800 mg potassium per 100 ml liquid food product; and
b) optionally at least 5 mg, preferably at least 7 mg, more preferably at least 10 mg, and preferably at most 100 mg, more preferably at most 90 mg, most preferably at most 80 mg magnesium per 100 ml liquid food product; and
c) optionally at least 5 mg, preferably at least 10 mg, more preferably at least 20 mg, and preferably at most 100 mg, more preferably at most 75 mg, most preferably at most 50 mg calcium per 100 ml liquid food product; and
d) at least 500 micromol), preferably at least 700 micromol, more preferably at least 800 micromol, and preferably at most 4000 micromol, more preferably at most 3000 micromol, most preferably at most 2500 micromol Trolox Equivalent Antioxidant Capacity (TEAC) per 100 ml liquid food product; and
e) at least 5 microgram, preferably at least 7 microgram, more preferably at least 10 microgram, and preferably at most 100 microgram, more preferably at most 90 microgram, most preferably at most 80 microgram folic acid per 100 ml liquid food product; and
f) optionally at least 0.01 mg, preferably at least 0.05 mg, more preferably at least 0.1 mg, and preferably at most 50 mg, more preferably at most 25 mg, most preferably at most 8 mg beta carotene per 100 ml liquid food product, and
whereby compounds a) to f) if present are derived from the fruit(s) and/or vegetable(s).

2. Packaged portion of food product according to claim 1, wherein per packaged portion of liquid food product Helianthus tuberosus (Jerusalem artichoke) is present in liquefied, puree, pulp, concentrate, extract or juice form in an amount of 2-6 g, based on dry weight Helianthus tuberosus.

3. Packaged portion of food product according to any one of the preceding claims, wherein the food product is a concentrate, such that the total volume of the packaged portion is between 50 and 150 ml, preferably 70 - 130 ml.

4. Packaged portion of food product according to any one of the preceding claims, further comprising acerola berries in liquefied, puree, pulp, concentrate, juice or extract form.

5. Packaged portion of food product according to any one of the preceding claims, which is substantially free from any of the following compounds: sweeteners, colourants, preservatives, antioxidants, other than from the fruits and/or vegetables and/or Helianthus tuberosus.

6. Packaged portion of food product according to any one of the preceding claims, which has a pH of 3.5 - 4.5, preferably 3.7 - 4.2.

7. Packaged portion of food product according to any one of the preceding claims, wherein the amount of fibres other than inulin is 0.5-3 g dry weight.

8. Packaged portion of food product according to any one of the preceding claims, wherein the packaging is a sealed container, preferably a sealed bottle.

9. Process for preparing a packaging comprising a portion of liquid food product according to any one of the preceding claims the process comprising the steps of:
- mixing part or all of the liquefied, puree, pulp, concentrate, extract or juice of fruit, vegetables and Helianthus tuberosus (Jerusalem artichoke)
- homogenising, de-aerating and pasteurising the mixture in any given order
- hot-filling packaging with the mixed, homogenised, de-aerated and pasteurised product and closing the packaging.

10. Process according to claim 9, wherein homogenising, de-aerating and pasteurising are carried out in the sequence of first homogenising, then de-aerating and then pasteurising.

11. Process according to claim 9 or 10, wherein after homogenising citrus fruit cells are added.

12. Use of Helianthus tuberosus for the manufacture of an edible product for an improved butyrate production.

## Patentansprüche

1. Abgepackte Portion eines flüssigen Nahrungsmittelprodukts, die eine Mischung von wenigstens einer (vorzugsweise wenigstens zwei) Fruchtspezies in verflüssigter, Püree-, Pulpe-, Konzentrat-, Extrakt- oder Saftform und wenigstens einer (vorzugsweise wenigstens zwei) Gemüsespezies in verflüssigter, Püree-, Pulpe-, Konzentrat-, Extrakt- oder Saftform in einer solchen Menge, dass sie einen wichtigen Teil der empfohlenen täglichen Aufnahmemenge an Frucht und Gemüsen bereitstellt, und außerdem Helianthus tuberosus (Jerusalem-Artischocke) in verflüssigter, Püree-, Pulpe-, Konzentrat-, Extrakt- oder Saftform in einer Menge pro abgepackte Portion eines flüssigen Nahrungsmittelprodukts von 1,5-8 g, bezogen auf das Trockengewicht von Helianthus tuberosus, umfasst,
wobei die abgepackte Portion einen wichtigen Teil der empfohlenen täglichen Aufnahmemenge an Früchten und Gemüsen bereitstellt, wenn sie umfasst:
a) wenigstens 150 mg, vorzugsweise wenigstens 200 mg, bevorzugter wenigstens 250 mg und vorzugsweise höchstens 1000 mg, bevorzugter höchstens 900, äußerst bevorzugt höchstens 800 mg Kalium pro 100 mg flüssiges Nahrungsmittelprodukt und
b) gegebenenfalls wenigstens 5 mg, vorzugsweise wenigstens 7 mg, bevorzugter wenigstens 10 mg und vorzugsweise höchstens 100 mg, bevorzugter höchstens 90 mg, äußerst bevorzugt höchstens 80 mg Magnesium pro 100 mg flüssiges Nahrungsmittelprodukt und
c) gegebenenfalls wenigstens 5 mg, vorzugsweise wenigstens 10 mg, bevorzugter wenigstens 20 mg und vorzugsweise höchstens 100 mg, bevorzugter höchstens 75 mg, äußerst bevorzugt höchstens 50 mg Calcium pro 100 mg flüssiges Nahrungsmittelprodukt und
d) wenigstens 500 Mikromol, vorzugsweise wenigstens 700 Mikromol, bevorzugter wenigstens 800 Mikromol und vorzugsweise höchstens 4000 Mikromol, bevorzugter höchstens 3000 Mikromol, äußerst bevorzugt höchstens 2500 Mikromol Trolox-äquivalente antioxidative Kapazität (TEAC) pro 100 ml flüssiges Nahrungsmittelprodukt und
e) wenigstens 5 Mikrogramm, vorzugsweise wenigstens 7 Mikrogramm, bevorzugter wenigstens 10 Mikrogramm und vorzugsweise höchstens 100 Mikrogramm, bevorzugter höchstens 90 Mikrogramm, äußerst bevorzugt höchstens 80 Mikrogramm Folsäure pro 100 ml flüssiges Nahrungsmittelprodukt und
f) gegebenenfalls wenigstens 0,01 mg, vorzugsweise wenigstens 0,05 mg, bevorzugter wenigstens 0,1 mg und vorzugsweise höchstens 50 mg, bevorzugter höchstens 25 mg, äußerst bevorzugt höchstens 8 mg beta-Carotin pro 100 ml flüssiges Nahrungsmittelprodukt und
wobei die Verbindungen a) bis f), wenn sie vorhanden sind, von der Frucht (den Früchten) und/oder dem Gemüse (den Gemüsen) stammen.

2. Abgepackte Portion eines Nahrungsmittelprodukts gemäß Anspruch 1, wobei pro abgepackte Portion eines flüssigen Nahrungsmittelprodukts Helianthus tuberosus (Jerusalem-Artischocke) in verflüssigter, Püree-, Pulpe-, Konzentrat-, Extrakt- oder Saftform in einer Menge von 2-6 g, bezogen auf das Trockengewicht von Helianthus tuberosus, vorliegt.

3. Abgepackte Portion eines Nahrungsmittelprodukts gemäß einem der vorangehenden Ansprüche, wobei das Nahrungsmittelprodukt ein derartiges Konzentrat ist, dass das Gesamtvolumen der abgepackten Portion zwischen 50 und 150 ml, vorzugsweise 70 - 130 ml liegt.

4. Abgepackte Portion eines Nahrungsmittelprodukts gemäß einem der vorangehenden Ansprüche, die außerdem Acerola-Kirschen in verflüssigter, Püree-, Pulpe-, Konzentrat-, Saft- oder Extraktform umfasst.

5. Abgepackte Portion eines Nahrungsmittelprodukts gemäß einem der vorangehenden Ansprüche, die im Wesentlichen frei von jeder der folgenden Verbindungen: Süßungsmittel, Färbemittel, Konservierungsmittel, Antioxidanzien, die andere als aus den Früchten und/oder Gemüsen und/oder Helianthus tuberosus sind, ist.

6. Abgepackte Portion eines Nahrungsmittelprodukts gemäß einem der vorangehenden Ansprüche, die einen pH von 3,5 - 4,5, vorzugsweise von 3,7 - 4,2, hat.

7. Abgepackte Portion eines Nahrungsmittelprodukts gemäß einem der vorangehenden Ansprüche, wobei die Menge an anderen Fasern als Inulin 0,5-3 g Trockengewicht ist.

8. Abgepackte Portion eines Nahrungsmittelprodukts gemäß einem der vorangehenden Ansprüche, wobei die Packung ein versiegelter Behälter, vorzugsweise eine versiegelte Flasche, ist.

9. Verfahren zur Herstellung einer Packung, umfassend eine Portion eines flüssigen Nahrungsmittelprodukts gemäß einem der vorangehenden Ansprüche, wobei das Verfahren die folgenden Schritte umfasst:
- Mischen eines Teils oder des Gesamten der verflüssigten, Püree-, Pulpe-, Konzentrat-, Extrakt- oder Saftform von Frucht, Gemüsen und Helianthus tuberosus (Jerusalem-Artischocke);
- Homogenisieren, Entlüften und Pasteurisieren des Gemisches in einer gegebenen Reihenfolge;
- Heißfüllen einer Packung mit dem gemischten, homogenisierten, entlüfteten und pasteurisierten Produkt und Verschließen der Packung.

10. Verfahren nach Anspruch 9, wobei Homogenisieren, Entlüften und Pasteurisieren in der Folge zuerst Homogenisieren, dann Entlüften und dann Pasteurisieren durchgeführt werden.

11. Verfahren nach Anspruch 9 oder 10, wobei nach Homogenisieren Citrusfruchtzellen zugesetzt werden.

12. Verwendung von Helianthus tuberosus für die Herstellung eines essbaren Produkts für eine verbesserte Butyrat-Produktion.

## Revendications

1. Portion emballée de produit alimentaire liquide comprenant un mélange d'au moins une (de préférence, d'au moins deux) espèce(s) de fruit(s) sous forme de produit liquéfié, purée, pulpe, concentré, extrait ou jus et d'au moins une (de préférence, d'au moins deux) espèce(s) de légume(s) sous forme de produit liquéfié, purée, pulpe, concentré, extrait ou jus, en une quantité telle qu'ils représentent une part importante de la quantité journalière recommandée de fruits et de légumes, comprenant, en outre, de *l'Helianthus tuberosus* (artichaut de Jérusalem) sous forme de produit liquéfié, de purée, de pulpe, de concentré, extrait ou de jus en une quantité de 1,5 à 8 g, sur la base du poids sec d'*Helianthus tuberosus*, par portion emballée de produit alimentaire liquide, par laquelle la portion emballée comprend
a) au moins 150 mg, de préférence, au moins 200 mg, plus préférablement, au moins 250 mg, et de préférence au plus 1 000 mg, plus préférablement, au plus 900 mg, et de manière préférée entre toutes, au plus 800 mg de potassium pour 100 ml de produit alimentaire liquide ; et
b) éventuellement, au moins 5 mg, de préférence, au moins 7 mg, plus préférablement, au moins 10 mg, et de préférence au plus 100 mg, plus préférablement, au plus 90 mg, et de manière préférée entre toutes, au plus 80 mg de magnésium pour 100 ml de produit alimentaire liquide ; et
c) éventuellement, au moins 5 mg, de préférence, au moins 10 mg, plus préférablement, au moins 20 mg, et de préférence au plus 100 mg, plus préférablement, au plus 75 mg, et de manière préférée entre toutes, au plus 50 mg de calcium pour 100 ml de produit alimentaire liquide ; et
d) au moins 500 micromoles, de préférence, au moins 700 micromoles, plus préférablement, au moins 800 micromoles, et de préférence au plus 4 000 micromoles, plus préférablement, au plus 3 000 micromoles, et de manière préférée entre toutes, au plus 2 500 micromoles d'équivalent Trolox^{®} pour la mesure de la capacité anti-oxydante (TEAC) pour 100 ml de produit alimentaire liquide ; et
e) au moins 5 microgrammes, de préférence, au moins 7 microgrammes, plus préférablement, au moins 10 microgrammes, et de préférence au plus 100 microgrammes, plus préférablement, au plus 90 microgrammes, et de manière préférée entre toutes, au plus 80 microgrammes d'acide folique pour 100 ml de produit alimentaire liquide ; et
f) éventuellement, au moins 0,01 mg, de préférence, au moins 0,05 mg, plus préférablement, au moins 0,1 mg, et de préférence au plus 50 mg, plus préférablement, au plus 25 mg, et de manière préférée entre toutes, au plus 8 mg de bêta-carotène pour 100 ml de produit alimentaire liquide ;
les composés a) à f), si présents, étant dérivés du ou des fruits et/ou du ou des légumes.

2. Portion emballée de produit alimentaire selon la revendication 1 dans laquelle, par portion emballée de produit alimentaire liquide, l'*Helianthus tuberosus* (artichaut de Jérusalem) est présent sous forme de produit liquéfié, de purée, de pulpe, de concentré, d'extrait ou de jus en une quantité de 2 à 6 g, sur la base du poids sec *d'Helianthus tuberosus.*

3. Portion emballée de produit alimentaire selon l'une quelconque des revendications précédentes, dans laquelle le produit alimentaire est un concentré tel que le volume total de la portion emballée est compris entre 50 et 150 ml, de préférence, entre 70 et 130 ml.

4. Portion emballée de produit alimentaire selon l'une quelconque des revendications précédentes comprenant, en outre, des baies acérola sous forme de produit liquéfié, de purée, de pulpe, de concentré, de jus ou d'extrait.

5. Portion emballée de produit alimentaire selon l'une quelconque des revendications précédentes, **caractérisée en ce qu'**elle est essentiellement dépourvue de l'un quelconque des composés suivants édulcorantes, colorants, conservateurs, antioxydants, autres que ceux provenant des fruits et/ou des légumes et/ou d'*Helianthus tuberosus.*

6. Portion emballée de produit alimentaire selon l'une quelconque des revendications précédentes, **caractérisée en ce qu'**elle a un pH de 3,5-4,5, de préférence, 3,7-4,2.

7. Portion emballée de produit alimentaire selon l'une quelconque des revendications précédentes, dans laquelle la quantité de fibres autres que l'inuline est de 0,5 à 3 g en poids sec.

8. Portion emballée de produit alimentaire selon l'une quelconque des revendications précédentes, dans laquelle l'emballage est un récipient fermé, de préférence, une bouteille fermée.

9. Procédé de préparation d'un emballage contenant une portion de produit alimentaire liquide selon l'une quelconque des revendications précédentes, ledit procédé comprenant les étapes consistant à :
■ mélanger tout ou partie du produit liquéfié, de la purée, de la pulpe, du concentré, de l'extrait ou du jus de fruit(s), de légume(s) et d'*Hellanthus tuberosus* (artichaut de Jérusalem)
■ homogénéiser, dégazer et pasteuriser le mélange dans un ordre donné quelconque
■ remplir à chaud l'emballage avec le produit mélangé, homogénéisé, dégazé et pasteurisé et fermer l'emballage.

10. Procédé selon la revendication 9, dans lequel l'homogénéisation, le dégazage et la pasteurisation sont effectués selon la séquence suivante : d'abord, homogénéisation, puis dégazage et pour finir pasteurisation.

11. Procédé selon les revendications 9 ou 10, dans lequel, après homogénéisation, les cellules d'agrumes sont ajoutées.

12. Utilisation d'*Helianthus tuberosus* dans la fabrication d'un produit comestible pour augmenter la production de butyrate.
